# EUROPEAN PATENT APPLICATION

(11) **EP 4 495 088 A1**
(43) Date of publication of application: **22.01.2025**
(21) Application number: 22940262.3
(22) Date of filing: 28.04.2022
(51) Int. Cl.: C05D 1/00

(54) **VITREOUS FERTILIZER FOR PLANT CULTIVATION**

(71) Applicant: Tomatec Co., Ltd., Kita-ku Osaka-shi, Osaka 531-8526 (JP)
(72) Inventor: AKITOMO Masaru, Osaka-shi Osaka 531-8526 (JP); KAWANO Mika, Beppu-shi, Oita 874-0843 (JP); KOZAKI Akinori, Osaka-shi, Osaka 531-8526 (JP)
(74) Representative: Manuel Illescas y Asociados, S.L.
(86) International application number: PCT/JP2022/019402
(87) International publication number: WO 2023/209989

(57) **Abstract**

[Problem] To provide a vitreous fertilizer for plant cultivation, said vitreous fertilizer being suitable as a fertilizer for application in soil. [Solution] The present invention is characterized by being a vitreous fertilizer for plant cultivation, said vitreous fertilizer being for application in soil, containing micronutrients, and being citric acid-soluble. The vitreous fertilizer for plant cultivation comprises a vitreous matrix and micronutrients that are contained in the vitreous matrix. The vitreous matrix is formed from a composition containing SiO₂, B₂O₃ and Al₂O₃ as main components and also containing an alkali metal oxide and an alkali earth metal oxide.

## Description

### FIELD OF THE INVENTION

The present invention relates to a glass fertilizer for plant cultivation, more specifically, a citric acid-soluble glass fertilizer for plant cultivation in which the glass matrix comprises a trace element with SiO₂, B₂O₃ and Al₂O₃ as main components thereof whose amount required by plants for their growth is very small.

### BACKGROUND OF THE INVENTION

There are 17 essential elements for plant growth, broadly categorized into macro elements and trace elements. Elements with small required amounts are called trace elements and include eight elements: Mn, Fe, B, Cu, Zn, Mo, Cl and Ni. Six of these elements, Mn, Fe, B, Cu, Zn and Mo, may be used as trace element fertilizers.

Each trace element has the disadvantage of oxidising and precipitating in the soil and binding tightly to the soil, and for example, there would be an issue that even if present in the soil, it eventually has difficulties in being absorbed by plants. On the one hand, although root acids that are released into the soil from plant roots and organic acids produced from organic matter in the soil have the effect of facilitating the absorption of trace elements into plants due to their chelating properties, which mask trace metal elements fixed in the soil, they may not be sufficient, resulting in a lack of trace elements in plants.

In view of such circumstances, there is a need for developing a fertilizer that can supply trace elements to plants in an efficiently stable manner by adding it to the soil in small quantities.

It is noted that although Patent Documents 1 and 2 disclose glass fertilizers similar to the present invention, they have the problems of being easily soluble in water and dissolving into the soil in a short period of time, making it impossible to supply trace elements stably over a long period of time, or being little soluble in water and dissolving into the soil so slowly that sufficient trace elements cannot be supplied to plants.

### PRIOR ART DOCUMENTS

### [Patent Documents]

[Patent Document 1] Chinese Patent Publication No. 1078711
[Patent Document 2] Japanese Unexamined Patent Publication No. 2002-3287

### SUMMARY OF THE INVENTION

### PROBLEM TO BE SOLVED BY THE INVENTION

The present invention provides a citric acid-soluble glass fertilizer for plant cultivation containing trace elements with improved elution properties after consideration of a composition that is more effective as a fertilizer to solve the problems of conventional technologies as described above.

### MEANS FOR SOLVING THE PROBLEMS

The invention according to the first aspect relates to a citric acid-soluble glass fertilizer for plant cultivation containing trace elements for application to soil, comprising: a glass matrix; and a trace element included in said glass matrix,
wherein said glass matrix comprises a composition containing an alkaline metal oxide and an alkaline earth metal oxide with SiO₂, B₂O₃ and Al₂O₃ as main components thereof.

The invention according to the second aspect relates to a glass fertilizer for plant cultivation that is the fertilizer described in the first aspect, wherein said glass matrix has a weight ratio of at least 20 to 35 weight percent for SiO₂, 5 to 30 weight percent of B₂O₃, 1 to 10 weight percent for Al₂O₃, 0.1 to 15 weight percent for Na₂O, 0.1 to 5 weight percent for K₂O (1 to 17 weight percent for Na₂O + K₂O), 10 to 20 weight percent for CaO, and 0.1 to 26 weight percent for MgO (13 to 35 weight percent for CaO + MgO).

The invention according to the third aspect relates to a glass fertilizer for plant cultivation that is the fertilizer described in the first aspect, wherein said glass matrix has a weight ratio of at least 20 to 35 weight percent for SiO₂, 5 to 12 weight percent for B₂O₃, 1 to 10 weight percent for Al₂O₃, 0.1 to 15 weight percent for Na₂O, 0.1 to 5 weight percent for K₂O (1 to 17 weight percent for Na₂O + K₂O), 10 to 20 weight percent for CaO, and 0.1 to 26 weight percent for MgO (13 to 35 weight percent for CaO + MgO).

The invention according to the fourth aspect relates to a glass fertilizer for plant cultivation that is the fertilizer described in the third aspect, wherein said glass matrix has a weight ratio of at least 20 to 35 weight percent for SiO₂, 5 to 12 weight percent for B₂O₃, 1 to 10 weight percent for Al₂O₃, 0.1 to 15 weight percent for Na₂O, 0.1 to 5 weight percent for K₂O (1 to 17 weight percent for Na₂O + K₂O), 10 to 20 weight percent for CaO, 0.1 to 26 weight percent for MgO (13 to 35 weight percent for CaO + MgO), and 12 to 40 weight percent for MnO₂.

The invention according to the fifth aspect relates to the glass fertilizer for plant cultivation described in the third aspect, wherein said trace element is Mn, Fe, B, Cu, Zn or Mo.

The invention according to the sixth aspect relates to the glass fertilizer for plant cultivation described in the third aspect, wherein a content of the trace element has a weight ratio of 15 to 65 weight percent of the fertilizer.

### EFFECT OF THE INVENTION

In accordance to the invention according to the first aspect, in the cultivation of plants such as vegetables and fruit trees etc., fertilizer content's elution properties, resulting from the root acids released from plant roots and organic acids (citric acid, etc.) produced from organic matter in the soil, can be adjusted based on the content of each of alkali metal oxides and alkaline earth metal oxides contained in the glass matrix in the glass fertilizer; in particular, the elution properties can be adjusted to a moderate level by adjusting the content of calcium and magnesium, which are alkaline earth metal oxides, which results in a stable fertilization effect of trace elements, which accomplishes the effect of further promoting plant growth.

In accordance to the invention according to the second aspect, the invention accomplishes the effect of making more gradual elution properties of the fertilizer using the composition of the glass matrix.

In accordance to the invention according to the third aspect, the invention accomplishes the effect of more preferably adjusting the elution properties of the fertilizer using the composition of the glass matrix.

In accordance to the invention according to the fourth aspect, the invention can adjust the elution properties of the fertilizer using the composition of the glass matrix, and further accomplishes the effect of stably supplying manganese to plants in the soil, which particularly affects plant growth among the trace elements.

In accordance to the invention according to the fifth aspect, the invention stably supplies, to plants, the six trace elements necessary for plant growth, including boron which is also an element that forms the glass framework in the glass matrix, thereby accomplishing the effect of achieving healthy plant growth and stable yields, including synergistic effects with other components.

In accordance to the invention according to the sixth aspect, there is a preferred range for the ratio of the glass matrix to the trace element components. When the amount of trace element components is high, the amount of the applied components increases and easily becomes excessive, and when the amount of trace element components is low, the effect of the fertilizer is weakened and it is undesirable.

### EXAMPLES

Suitable examples of the glass fertilizer for plant cultivation according to the invention are described in the following.

This invention provides a controlled-release glass fertilizer through development of a technique for controlling chemical properties of glass, in this case, a technique for expressing properties demonstrating poor solubility in water and solubility in weak acids, in relation to the glass composition, and further optimization of the composition.

Further, some or all of the essential trace components of plants, which are Mn, Fe, B, Cu, Zn and Mo, can be included in the glass described above up to a weight ratio of 15 to 65 weight percent in total amount (in terms of oxides).

SiO₂ forms the glass framework. At 20 weight percent or less, the glass is easily eluted in acids and does not function as a slow-release fertilizer. Further, at 35 weight percent or more, the glass is undesirable as the melting temperature of the glass becomes higher, making it difficult to manufacture, and forming undissolved products when dissolved in acids.

B₂O₃ forms the glass framework and is also a trace element, and its elution needs to be controlled. At 5 weight percent or less, the melting temperature of the glass becomes higher, making it difficult to manufacture and the glass becomes difficult to elute in acids, weakening the fertilization effect of B₂O₃. Further, at 30 weight percent or more, the glass framework becomes weaker and the glass becomes easy to elute into acids, making it unable to function as a slow-release fertilizer. More preferably, it is at 5 to 12 weight percent.

Al₂O₃ affects both formation of the glass framework and elution properties in acids; and when the content is higher than 10 weight percent, the melting temperature of the glass becomes higher, and the glass becomes difficult to manufacture, and when the content is lower than 1 weight percent, the glass becomes easy to elute in acids.

Although Na₂O, an alkali metal oxide, is an essential component since it lowers the melting temperature of the glass, at 15 weight percent or more, the elution in acids becomes larger and it becomes unsuitable as a fertilizer.

Although K₂O is an essential component for stabilizing the glass, at 5 weight percent or more, it is undesirable as it loses water resistance and the elution in acids increases. When the total amount of Na₂O and K₂O is 1 weight percent or less, the melting point becomes higher and the glass becomes difficult to manufacture, and when the total amount is 17 weight percent or more, it elutes in acids too much, making it undesirable as a controlled-release fertilizer.

Although alkaline earth metal oxides have the same effect as alkali metal oxides in that they cleave the glass framework and increase the elution in acids, they function in different degrees with alkaline earth metal oxides functioning more moderately. When CaO is at 10 weight percent or less, the melting point becomes higher, making the glass difficult to manufacture, and at 20 weight percent or more, it elutes in acids too much.

Although MgO is an essential component for stabilizing the glass, when over 26 weight percent is included, the glass becomes easy to elute in acids and does not act as a slow-release fertilizer.

Furthermore, the total amount of MgO and CaO that are alkaline earth metal oxides is preferably 13 to 35 weight percent, which is suitable for glass properties intended for fertilizer applications.

Upon melting the glass with compositions in the above composition range, MnO₂, Fe₂O₃, B₂O₃, CuO, ZnO and MoO₃ can be added at a weight ratio of up to 15 to 65 weight percent in total amount during the preparation of the raw materials. These components are essential trace elements for plants, and depending on the degree at which the glass dissolves in weak acids, these trace elements will also elute. Therefore, in addition to the main components such as SiO₂, B₂O₃ and Al₂O₃ etc., these trace elements are also expected to show similar elution.

In general, root acids (organic acids) are released from the plant roots and various kinds of organic acids (for example, citric acid) are produced from organic matter in the soil. For example, the contributors to dissolving in such citric acid may become the key, depending on its amount included in the overall composition. In contrast to SiO₂ and B₂O₃, which form the glass framework, Na₂O and K₂O that are alkali metal oxides not only cleave the glass framework but also lower the melting point, making it easier to form glass. MgO and CaO that are alkaline earth metal oxides also have the effect of "cleaving" the glass framework in a similar manner; however, alkaline earth metal oxides function more moderately and are therefore easy to use to adjust the melting of the glass. By changing the ratio of each of the above glass forming components, the ease of manufacturing the glass and its controlled-release action as a fertilizer are adjusted.

Furthermore, each embodiment of the invention is described with reference to the Examples. The technical scope of the invention is not limited by these Examples.

### Example 1

### Methods of Manufacturing Glass Fertilizers

Raw materials were prepared to make the compositions shown in Table 1 and the mixture was placed in batches in a clay crucible, heated in a gas furnace and held at 1280°C for one hour, after which the crucible was removed and the molten material was poured out onto a water-cooled stainless steel roll and quenched to obtain thin glass samples. For the glass raw materials, manganese ore, calcium carbonate, borax, feldspar, silicastone and soda ash etc. were used.

The thin glass samples were ground so that about 80 percent passed through a 150 µm wire sieve to make a glass fertilizer for plant cultivation.

### Acid Elution Properties of Glass Fertilizers

The elution properties of the present glass fertilizer in acid were investigated. The Fertilizer Act stipulates that a 2-weight-percent citric acid solution should be used for determining the elution properties of fertilizers.

However, as a fertilizer is assessed to be effective for application by this method even if the fertilizer elutes too much and is no longer a controlled release fertilizer, the present invention was evaluated by confirming both the elution in acetic acid and ammonium acetate, which are weaker acids than citric acid. The composition of each glass fertilizer used in each of the following examples is shown in Table 1 below. The notation is in weight percent.

**Table 1**

| w% | | | | | | | | | | | | | | |
|---|---|---|---|---|---|---|---|---|---|---|---|---|---|---|
| | SiO₂ | Al₂O₃ | B₂O₃ | Na₂O | K₂O | K₂O + Na₂O | CaO | MgO | MgO+CaO | Fe₂O₃ | CuO | ZnO | MnO₂ | MoO₃ |
| Example 1 | 29 | 6 | 11 | 5 | 1 | 6 | 14 | 2 | 15 | 5 | | | 27 | |
| Example2 | 34 | 1 | 12 | 5 | 2 | 8 | 18 | 1 | 19 | 2 | 3 | 5 | 14 | |
| Example3 | 31 | 9 | 5 | 5 | 3 | 8 | 17 | 2 | 19 | 7 | | | 21 | |
| Example4 | 30 | | 18 | 7 | 3 | 10 | 17 | 18 | 35 | | | | | |
| Example5 | 29 | 1 | 27 | 13 | 2 | 15 | 11 | 13 | 24 | 1 | | | | |
| | | | | | | | | | | | | | | |
| Comparative Example 1 | 37 | 8 | 32 | 11 | | 11 | 8 | 1 | 12 | | | | | |
| Comparative Example 2 | 10 | 8 | 13 | 5 | | 5 | 9 | 3 | 12 | | | 6 | 16 | |

### Citric Acid Solubility Assessment

1.0 g of glass fertilizer was placed into a 250 mL flask, 150 mL of a 2-weight-percent citric acid (pH ≈ 2 ) solution heated to about 30°C was added, hermetically sealed and rotationally shaken for 1 hour under the condition of 30 to 40 rotations/min (30±1°C) in a rotary shaker.

After cooling, water was added up to the marked line and the mixture was filtered to make a sample solution and the concentration of each trace element (Mn, B, Cu, Zn) and Mg in the filtrate was determined by a standard analysis method to measure the citric acid-soluble component of each trace element.

### Acetic Acid and Ammonium Acetate Solubility Assessment

Next, solubility in acetic acid and ammonium acetate was assessed using the following reagents.
(i) 1.0 M-acetic acid
(ii) 1.0M-ammonium acetate (pH 4.5)
(iii) 1.0M-ammonium acetate (pH 7.0)

Each reagent was prepared and its solubility in acetic acid and ammonium acetate was assessed by performing the same steps as in the citric acid solubility assessment above.

The result for elution amount and the elution rate of Mn and B in each example is shown in Table 2 below. The data in the lower box for each example shows the percentage when the elution rate in a 2-weight-percent citric acid is defined as 100. The elution rate for each of the added compounds is desirably, by weight, (i) 95 percent or more in 1.0 M acetic acid, (ii) approximately 80 percent in 1.0M ammonium acetate (pH 4.5), (iii) approximately 20 percent 1.0M in ammonium acetate (pH 4.5), respectively, and in each example studied, the elution properties of the trace elements were favourable.

Comparative Example 1 contains more than 30 weight percent of B₂O₃ in the composition, and the elution rate in ammonium acetate is too high since the amount of Na₂O + K₂O is relatively high due to the low amount of CaO + MgO, which results in an easily eluting fertilizer. It would dissolve in the soil in a short period of time and would not provide a stable supply of trace elements over a long period of time.

Since Comparative Example 2 contains as high as 48 weight percent of SiO₂ + Al₂O₃ in the composition, and a relatively low amount of alkali metal oxides and alkaline earth metal oxides, which forms too much of the glass framework to easily elute out, the elution rate in ammonium acetate is too low. This would result in too slow dissolution in the soil and would not provide sufficient trace elements to the plant.

**Table 2**

| No. | MnO Elution Amount (%) and Elution Rate (%) | | | | B₂O₃ Elution Amount (%) and Elution Rate (%) | | | |
|---|---|---|---|---|---|---|---|---|
| | 2 w % Citric Acid | 1M Acetic Acid pH2.3 | 1M Ammonium Acetate | | 2 w% Citric Acid | 1M Acetic Acid pH2.3 | 1M- Ammonium Acetate | |
| | | | pH4.5 | pH7.0 | | | pH4.5 | pH7.0 |
| Example 1 | 21.9 | 22.4 | 16.9 | 3.3 | 9.1 | 9.0 | 8.6 | 1.8 |
| | 100 | 102 | 77 | 15 | 100 | 98 | 94 | 20 |
| Example 2 | 11.9 | 12.1 | 9.6 | 2.2 | 10.6 | 10.4 | 9.3 | 2.5 |
| | 100 | 102 | 81 | 19 | 100 | 98 | 88 | 23 |
| Example 3 | 19.9 | 20.0 | 15.1 | 2.7 | 4.5 | 4.2 | 3.7 | 0.8 |
| | 100 | 101 | 76 | 14 | 100 | 93 | 82 | 18 |
| Example 4 | - | - | - | - | 17.3 | 17.7 | 16.0 | 6.3 |
| | - | - | - | - | 100 | 102 | 92 | 36 |
| Example 5 | - | - | - | - | 28.2 | 28.5 | 25.7 | 8.2 |
| | - | - | - | - | 100 | 101 | 91 | 29 |
| | | | | | | | | |
| Comparative 1 Example | - | - | - | - | 30.9 | 30.6 | 30.0 | 21.9 |
| | - | - | - | - | 100 | 99 | 97 | 71 |
| Comparative 2 Example | 12.5 | 8.7 | 3.0 | 1.3 | 12.8 | 9.1 | 3.9 | 1.7 |
| | 100 | 70 | 24 | 10 | 100 | 71 | 30 | 13 |

| | | | | | | | | |
|---|---|---|---|---|---|---|---|---|
| 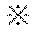 The lower numbers are the percentage when the elution in two weight percent citric acid is set as 100 | | | | | | | | |

### Test Example 1

### Effect of Treating Soybeans with the Fertilizer of the Present Invention

10 kg of air-dried grey lowland soil (containing 0.26 mg/kg of hot water-soluble boron) was filled into 0.05 m² pots and soybean was grown. The test sections were treated with 4, 6, 10 and 15 g per square metre of glass fertilizer prepared as in Example 1 (see Example 1 in Table 1) and ground so that about 80 percent of it passed a 150 µm wire sieve, respectively. The samples from Comparative Example 1 were also applied respectively to achieve the same boron content per square metre as the respective sections in this Example. In common with all pots, 0.7 g of nitrogen, 1.7 g of phosphorus and 1.7 g of potassium were applied to the soil per pot with a water-soluble compound fertilizer.

The results of the soybean harvest survey are presented in Table 3. Seedlings in no-fertilizer applied (control) section had fewer, smaller, wrinkled, and immature beans. On the other hand, in the section where 4 g of Example 1 were applied per square meter, increased yield effects were observed, with the number of sterile legumes reduced by one third and the yield increased.

Further, in the seedlings, the number of beans increased two-fold, the 100-beans weight increased 1.2-fold, and the bean weight per pot (yield) increased two-fold, respectively. Setting the cropping index of the no-fertilizer treatment section to 100, it was observed that applying the fertilizer of the present invention increased the yield to 236, in other words around 2.4-fold.

**Table 3 Results of Soybean Harvesting**

| Test Section | Legumes | | Grains | | | |
|---|---|---|---|---|---|---|
| | Number of Fertile Legumes (per pot) | Number of Infertile Legumes (per pot) | Number of Beans (per pot) | 100-Beans Weight (g) | Bean Weight (Yield) (g/pot) | Cropping Index |
| No Treatment (Control) | 480 | 273 | 183 | 24.5 | 45 | 100 |
| Example 14 g/m² | 402 | 103 | 355 | 29.8 | 106 | 236 |
| Example 16 g/m² | 426 | 127 | 316 | 28.3 | 91 | 202 |
| Example 110 g/m² | 417 | 104 | 380 | 28.8 | 109 | 242 |
| Example 115 g/m² | 388 | 96 | 351 | 29.9 | 105 | 233 |
| Comparative Example 11.2 g/m² | 426 | 104 | 336 | 29.0 | 97 | 216 |
| Comparative Example 11.8 g/m² | 396 | 113 | 311 | 27.4 | 85 | 189 |
| Comparative Example 12.9 g/m² | 459 | 135 | 376 | 25.2 | 96 | 213 |
| Comparative Example 14.4 g/m² | 447 | 147 | 359 | 29.0 | 104 | 231 |

### Test Example 2

### Treatment Tests on Broccoli

Broccoli was grown in a conventional manner in light-coloured black-bok soil in open fields. The test sections were treated with Example 1 described above. Broccoli seedlings were planted and grown in a conventional manner without applying Example 1 in the no-fertilizer treatment section.

As a common fertilizer, 20 g nitrogen, 20 g phosphorus and 20 g potassium per square meter were applied to the soil with a water-soluble compound fertilizer.

In the no-treatment section, symptoms of apparent boron deficiency occurred, resulting in poor growth of the whole plant, yellowing and shrivelling of the leaf margins, scabby symptoms in the petiole and stem areas, poor flower bud colour and poor appearance quality. Then, as described in Table 4 below, the application of Example 1 increased flower bud diameter, particularly stem and leaf weight and flower bud weight two-fold, and increased yield 2.5-fold. Furthermore, the component in the crop showed an increase in manganese and boron content and a decrease in excess nitrate-nitrogen components in the treatment sections of Example 1. In addition, vitamin C in the crop was increased and mostly the internal quality of the crop was improved.

**Table 4**

| Results of Growth Study | | | | | | | | |
|---|---|---|---|---|---|---|---|---|
| | Number of Leaves | Leaf Growth | Flower Bud Diameter | Flower Bud Height | Leaf Stem Weight | Flower Bud Weight | Yield | Appearance Quality |
| | Leaves / Plant | cm | cm | cm | g/plant | g/plant | kg/10a | |
| Treated Section | 19 | 57 | 15 | 12 | 1,171 | 381 | 1,524 | Excellent |
| No Treatment Section | 16 | 43 | 12 | 11 | 522 | 159 | 636 | B deficiency |

### Results of Component Analysis

| | Manganese | Mn | Boron | B | Nitric Acid | NO₃ | Vitamin C | | Brix | |
|---|---|---|---|---|---|---|---|---|---|---|
| | mg/ kg | dry matter | mg/kg | dry matter | mg/kg | fresh matter | mg/kg | fresh matter | | |
| | Leaf | Flower Bud | Leaf | Flower Bud | Leaf | Flower Bud | Leaf | Flower Bud | Leaf | Flower Bud |
| Treated Section | 45 | 18 | 22 | 26 | 3,700 | 62 | 1,590 | 1,740 | 7.6 | 9.1 |
| No Treatment Section | 36 | 16 | 7 | 1 | 6,600 | 220 | 1,430 | 1,350 | 7.6 | 9.0 |

### INDUSTRIAL APPLICABILITY

The invention is suitable for use, for example, as a citric acid soluble glass fertilizer for plant cultivation containing trace elements, with the formation, etc. adjusted accordingly.

## Claims

1. A citric acid-soluble glass fertilizer for plant cultivation containing trace elements for application to soil, comprising: a glass matrix; and a trace element included in said glass matrix,
wherein said glass matrix comprises a composition containing an alkaline metal oxide and an alkaline earth metal oxide with SiO₂, B₂O₃ and Al₂O₃ as main components thereof.

2. The glass fertilizer for plant cultivation of claim 1, wherein said glass matrix has a weight ratio of at least 20 to 35 weight percent for SiO₂, 5 to 30 weight percent for B₂O₃, 1 to 10 weight percent for Al₂O₃, 0.1 to 15 weight percent for Na₂O, 0.1 to 5 weight percent for K₂O (1 to 17 weight percent for Na₂O + K₂O), 10 to 20 weight percent for CaO, and 0.1 to 26 weight percent for MgO (13 to 35 weight percent for CaO + MgO).

3. The glass fertilizer for plant cultivation of claim 1, wherein said glass matrix has a weight ratio of at least 20 to 35 weight percent for SiO₂, 5 to 12 weight percent for B₂O₃, 1 to 10 weight percent for Al₂O₃, 0.1 to 15 weight percent for Na₂O, 0.1 to 5 weight percent for K₂O (1 to 17 weight percent for Na₂O + K₂O), 10 to 20 weight percent for CaO, and 0.1 to 26 weight percent for MgO (13 to 35 weight percent for CaO + MgO).

4. The glass fertilizer for plant cultivation of claim 3, wherein said glass matrix has a weight ratio of at least 20 to 35 weight percent for SiO₂, 5 to 12 weight percent for B₂O₃, 1 to 10 weight percent for Al₂O₃, 0.1 to 15 weight percent for Na₂O, 0.1 to 5 weight percent for K₂O (1 to 17 weight percent for Na₂O + K₂O), 10 to 20 weight percent for CaO, 0.1 to 26 weight percent for MgO (13 to 35 weight percent for CaO + MgO), and 12 to 40 weight percent for MnO₂.

5. The glass fertilizer for plant cultivation of claim 3, wherein said trace element is Mn, Fe, B, Cu, Zn or Mo.

6. The glass fertilizer of claim 3, wherein a content of the trace element has a weight ratio of 15 to 65 weight percent of the fertiliser.

## Amended claims

### Amended claims under Art. 19.1 PCT

1. A citric acid-soluble glass fertilizer for plant cultivation containing trace elements for application to soil, comprising: a glass matrix; and a trace element included in said glass matrix, wherein said glass matrix comprises a composition containing an alkaline metal oxide and an alkaline earth metal oxide with SiO₂, B₂O₃ and Al₂O₃ as main components thereof, and wherein said glass matrix has a weight ratio of at least 20 to 35 weight percent for SiO₂, 5 to 12 weight percent for B₂O₃, 1 to 10 weight percent for Al₂O₃, 0.1 to 15 weight percent for Na₂O, 0.1 to 5 weight percent for K₂O (1 to 17 weight percent for Na₂O + K₂O), 10 to 20 weight percent for CaO, and 0.1 to 26 weight percent for MgO (13 to 35 weight percent for CaO + MgO).

2. The glass fertilizer for plant cultivation of claim 1, wherein said glass matrix has a weight ratio of at least 20 to 35 weight percent for SiO₂, 5 to 12 weight percent for B₂O₃, 1 to 10 weight percent for Al₂O₃, 0.1 to 15 weight percent for Na₂O, 0.1 to 5 weight percent for K₂O (1 to 17 weight percent for Na₂O + K₂O), 10 to 20 weight percent for CaO, 0.1 to 26 weight percent for MgO (13 to 35 weight percent for CaO + MgO), and 12 to 40 weight percent for MnO₂.

3. The glass fertilizer for plant cultivation of claim 1, wherein said trace element is Mn, Fe, B, Cu, Zn or Mo.

4. The glass fertilizer for plant cultivation of claim 1, wherein a content of the trace element has a weight ratio of 15 to 65 weight percent of the fertiliser.

Statement under Art. 19.1 PCT

Claim 1 has been amended to incorporate the matters specifying the invention of Claim 3 as of the filing of the international application.
Claim 2 has been deleted.
The weight ratios of respective components incorporated into Claim 1 by this amendment are based on the grounds of the descriptions in paragraphs [0024] to [0030] of the specification.
   In particular, amendment has been made to clearly show the following differences with respect to the literature cited as Document 1 in the Written Opinion Of The International Searching Authority:
   (Difference 1) Weight ratios of CaO, MgO, and CaO+MgO are limited.
   (Difference 2) Weight ratio of B₂O₃ is 5 to 12 weight percent.
The effects of the above (Difference 1) are as described in paragraph 0028 that "Although alkaline earth metal oxides have the same effect as alkali metal oxides in that they cleave the glass framework and increase the elution in acids, they function in different degrees with alkaline earth metal oxides functioning more moderately. When CaO is at 10 weight percent or less, the melting point becomes higher, making the glass difficult to manufacture, and at 20 weight percent or more, it elutes in acids too much.", as described in paragraph 0029 that "Although MgO is an essential component for stabilizing the glass, when over 26 weight percent is included, the glass becomes easy to elute in acids and does not act as a slow-release fertilizer.", and as described in paragraph 0030 that "Furthermore, the total amount of MgO and CaO that are alkaline earth metal oxides is preferably 13 to 35 weight percent, which is suitable for glass properties intended for fertilizer applications."
   In other words, Difference 1 provides opposing effects, facilitating the manufacturing of glass and producing a slow-release effect as a fertilizer, at the same time.
The effect of the above (Difference 2) is as described in paragraph 0025 that "B₂O₃ forms the glass framework and is also a trace element, and its elution needs to be controlled. At 5 weight percent or less, the melting temperature of the glass becomes higher, making it difficult to manufacture and the glass becomes difficult to elute in acids, weakening the fertilization effect of B₂O₃. Further, at 30 weight percent or more, the glass framework becomes weaker and the glass becomes easy to elute into acids, making it unable to function as a slow-release fertilizer. More preferably, it is at 5 to 12 weight percent."
